# EUROPEAN PATENT SPECIFICATION

(11) **EP 3 284 929 B1**
(45) Date of publication and mention of the grant of the patent: **30.09.2020**
(21) Application number: 17186606.4
(22) Date of filing: 17.08.2017
(51) Int. Cl.: F02C 7/18, F02C 7/224, F28F 27/02

(54) **HEAT EXCHANGER ARRANGEMENT FOR A GAS TURBINE**
WÄRMETAUSCHERANORDNUNG FÜR EINE GASTURBINE
AGENCEMENT D'ÉCHANGEUR DE CHALEUR POUR UNE TURBINE À GAZ

(30) Priority: 17.08.2016 US 201615239499
(43) Date of publication of application: 21.02.2018
(73) Proprietor: Hamilton Sundstrand Corporation, Charlotte, NC 28217-4578 (US)
(72) Inventor: STAMBAUGH, Craig T., Tolland, CT Connecticut 06084 (US)
(74) Representative: Dehns

(56) References cited:
- EP-A2- 2 664 766
- US-A1- 2013 036 722
- US-A1- 2014 102 105
- US-A1- 2014 341 256
- US-A1- 2015 375 868

## Description

### FEDERAL RESEARCH STATEMENT

This invention was made with government support under United States Navy Contract No. N00019-02-C-3003. The government has certain rights in the invention.

### BACKGROUND OF THE INVENTION

### 1. Field of the Invention

The present disclosure relates to thermal management, and more particularly to thermal management of fluid flows in vehicles like aircraft.

### 2. Description of Related Art

Vehicles such as aircraft commonly have electrical systems with electrical devices that generate heat during operation. In some electrical systems heat generation can be such that cooling is necessary. Cooling in such electrical systems is generally by provided by flowing a coolant flow to heat generating components, transferring heat to the coolant, and thereafter flowing the heated coolant to the external environment, where the heat is dissipated into the ambient environment.

With the advent of 'more electric' aircraft increasingly large amounts of heat from electrical devices and electrical systems require movement within the aircraft. One approach to moving heat within such aircraft is by moving coolant through the aircraft airframe between heat generating devices and the ambient environment. In this respect the ambient environment serves as an infinite heat sink into which waste heat from heat generating electrical devices can be dissipated.

Such conventional methods and systems have generally been considered satisfactory for their intended purpose. However, there is still a need in the art for improved thermal management systems. The present disclosure provides a solution for this need.

A heat exchanger arrangement is taught in US 2015/375868.

### SUMMARY OF THE INVENTION

According to the present invention, a exchanger arrangement: for a gas turbine is defined in claim 1 and includes a heat exchange body, a first fluid path extending through the heat exchange body, and a second fluid path extending through the heat exchange body in thennal communication with the first fluid path and fluidly isolated from the first fluid path. A bypass path is arranged externally of the heat exchange body and is fluidly connected in parallel with the first fluid path. A control module is operably connected to the bypass path to control temperature of fluids traversing the first fluid path and the second fluid path. A second bypass path is arranged external of the heat exchange body and fluidly connected in parallel with the second fluid path.

In certain embodiments, the first bypass path can include a bypass valve disposed along the fluid path. The control module can be operatively connected to the bypass valve. A temperature sensor can be in thermal communication with the fluid path and downstream of the heat exchange body. The control module can be connected to the temperature sensor.

In accordance with certain embodiments, the bypass valve can be a first bypass valve and a second bypass valve can be disposed along the second fluid path. The control module can be operatively connected to the second bypass valve. A temperature sensor can be in thermal communication with the second fluid path. The temperature sensor can be disposed downstream of the heat exchange body. The control module can be connected to the temperature sensor.

It is also contemplated that, in accordance with certain embodiments, either or both the first fluid path and the second fluid path can be in fluid communication with a lubrication circuit of a gas turbine engine, a fuel circuit of a gas turbine engine, or a bleed air passage of a gas turbine engine compressor section. The control module can be configured to execute instructions recorded on a non-transitory machine-readable medium to flow a first fluid through a heat exchange body, flow a second fluid through the heat exchange body, and transfer heat between the first fluid flow and the second fluid flow. The instructions can also cause the control module to drive temperature of the first fluid flow to a predetermined temperature by throttling flow of the first fluid through the heat exchanger. The instructions can further cause the control module to drive temperature of the second fluid flow to a predetermined temperature by throttling flow of the second fluid through the heat exchanger.

A thermal management system includes a heat exchanger arrangement as described above, a first bypass valve disposed along the first bypass path, and a second bypass valve disposed along the second bypass path. A first temperature sensor is in thermal communication with the first fluid path downstream of the heat exchange body and a second temperature sensor in thermal communication with the second fluid path downstream of the heat exchange body. The control module is communicative with the first and second temperature sensors, and is operatively connected to the first and second bypass valves to access thermal margin of the fluid flows when either or both of the flows is below the respective fluid temperature limit.

A thermal management method includes flowing a first fluid through a heat exchange body, flowing a second fluid through the heat exchange body, and transferring heat between the first fluid flow and the second fluid flow. Temperature of the first fluid flow is driven to a predetermined temperature by throttling flow of the first fluid through the heat exchanger. Temperature of the second fluid flow is driven to a predetermined temperature by throttling flow of the second fluid through the heat exchanger.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an exemplary embodiment of thermal management system showing an aircraft having a gas turbine engine in thermal communication with the thermal management system;
Fig. 2 is a schematic view of an exemplary embodiment of the thermal management system of Fig. 1, showing a heat exchanger arrangement in thermal communication with first and second flow paths for transferring heat between the first and second flow paths using a flow bypass path;
Fig. 3 is a schematic view of an embodiment of the thermal management system according to the present invention showing a heat exchanger arrangement in thermal communication with first and second flow paths for transferring heat between the first and second flow paths using first and second flow bypass paths; and
Fig. 4 is a chart of a thermal management method, showing steps for accessing thermal margin in a first fluid system using a second fluid system.

### DETAILED DESCRIPTION OF THE PREFERRED EMBODIMENTS

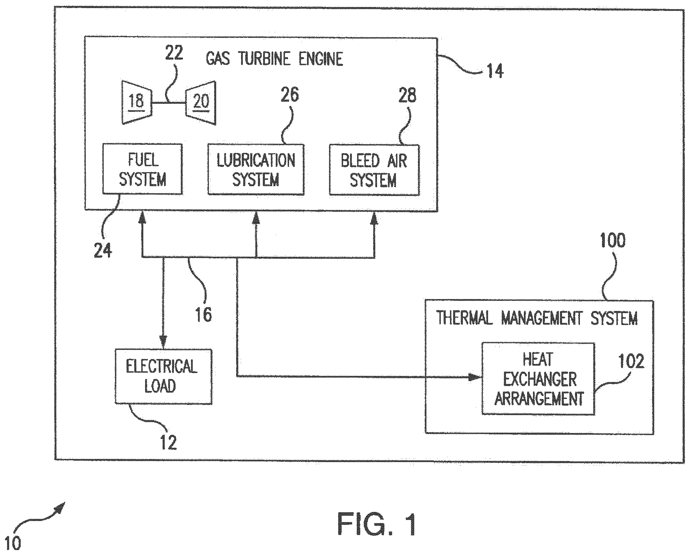

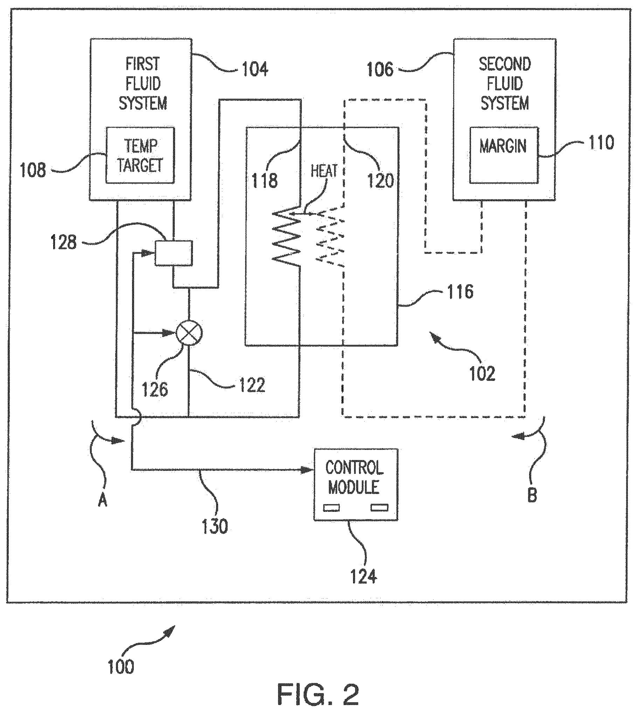

Reference will now be made to the drawings wherein like reference numerals identify similar structural features or aspects of the subject disclosure. For purposes of explanation and illustration, and not limitation, a partial view of an exemplary embodiment of a heat exchanger arrangement in accordance with the disclosure is shown in Fig. 1 and is designated generally by reference character 102. Other embodiments of heat exchanger arrangements, thermal management systems, and thermal management methods in accordance with the disclosure, or aspects thereof, are provided in Figs. 2-4, as will be described. The systems and methods described herein can be used for managing heat flow in gas turbine engine fluid flows in aircraft, though the present disclosure is not limited to gas turbine engines or to aircraft in general.

Referring to Fig. 1, a vehicle, e.g., aircraft 10, is shown. Aircraft 10 includes an electrical load 12, a thermal management system 100, a gas turbine engine 14 interconnected by a fluid system 16. Gas turbine engine 14 includes a compressor section 18 coupled to a turbine section 20 by a shaft 22, a fuel system 24, a lubrication system 26, and a bleed air system 28. Electrical system 12 includes one or more heat generating component, e.g., avionics, environmental control devices, motor controllers, power converters, etc. Thermal management system 100 includes heat exchanger arrangement 102, which is in thermal communication with two or more of fuel system 24, lubrication system 26, and bleed air system 28. Electrical system 12 is also in thermal communication with one or more of fuel system 24, lubrication system 26, and bleed air system 28.

With reference to Fig. 2, thermal management system 100 is shown. Thermal management system 100 includes heat exchanger arrangement 102, a first fluid system 104, and a second fluid system 106. First fluid system 104 has a temperature target 108, which may be selectable, and second fluid system 106 has thermal margin 110, either or both of which may be a function of the operating regime of aircraft 10 (shown in Fig. 1). First fluid system 104 and second fluid system 106 are in thermal communication with one another through heat exchanger arrangement 102, heat thereby moving between first fluid system 104 and second fluid system 106. It is contemplated that first fluid system 104 and/or second fluid system 106 can be in fluid communication with a fuel system, e.g., fuel system 24 (shown in Fig. 1), a lubrication system, e.g., lubrication system 26 (shown in Fig. 1), and/or a bleed air system, e.g., bleed air system 28 (shown in Fig. 1).

Heat exchanger arrangement 102 is a unidirectional heat exchanger arrangement and includes a heat exchange body 116, a first fluid path 118 extending through heat exchange body 116, and a second fluid path 120 extending through heat exchange body 116. First fluid path 118 is in thermal communication with the second fluid path 120 within heat exchange body 116 and is fluidly isolated from second fluid path 120.

A bypass path 122 is disposed externally to heat exchange body 116 and is fluidly connected in parallel with first fluid path 118. As will be appreciated by those of skill in the art in view of the present disclosure, fluid traversing bypass path 122 bypasses heat exchange body 116, thereby reducing (or eliminating) heat transfer between a portion of fluid traversing first fluid path 118 and second fluid path 120.

Heat exchanger arrangement 102 also includes a control module 124, a bypass valve 126, and a temperature sensor 128, which in the illustrated exemplary embodiment are disposed outside (i.e. externally) of heat exchange body 116. Temperature sensor 128 is arranged along first fluid path 118 to acquire temperature information corresponding to the temperature of fluid downstream of heat exchange body 116. Temperature sensor 128 is also arranged downstream of a location where fluid traversing bypass path 122 rejoins first fluid path 118.

Bypass valve 126 is disposed along bypass path 122 and is arranged for throttling fluid traversing bypass path 122. In this respect bypass valve 126 apportions fluid flow received from first fluid system 104 between bypass path 122 and heat exchange body 116. As will be appreciated by those of skill in the art in view of the present disclosure, throttling fluid flow through bypass path 122 influences thermal communication between first fluid path 118 and second fluid path 120.

Control module 124 is operatively connected to bypass valve 126 and is communicative with temperature sensor 128 through a link 130. As illustrated in Fig. 2, link 130 is a communication bus. As will be appreciated by those of skill in the art, operative connection to bypass valve 126 and communication with temperature sensor 128 may be through discrete conductors, wireless devices, or optical devices, as suitable for a given application.

Control module 124 modulates the amount of heat transferred between first fluid path 118 and second fluid path 120. In particular, control module 124 determines the temperature of fluid A traversing first fluid path 118 at a location downstream of heat exchange body 116, and compares the determined temperature with a selectable temperature target 108. Based on the comparison of the determined (i.e. actual) temperature, control module 124 throttles, i.e. increases or decreases, the proportion of fluid A flowing through bypass path 122 in relation to the proportion of fluid A flowing through heat exchange body 116 from first fluid path 118, thereby modulating temperature by throttling flow of fluid A through heat exchange body 116.

Decreasing the proportion of fluid A flowing through heat exchange body 116 reduces the transfer of heat between fluid A and fluid B through heat exchange body 116. This increases the temperature of fluid A returning to first fluid system 104 - which can be advantageous when fluid A is below temperature target 108. Thus, if there is thermal margin in first fluid system 104, margin meaning that additional waste heat can be temporarily stored in fluid A, increasing the fluid flow through bypass path 122 allows for utilization of thermal margin 110 of second fluid system 106 by first fluid system 104. In systems where the cold side fluid, e.g., fluid B, otherwise requires a supplemental heat sink to maintain operation at its limit (such as a fuel recirculation system back to aircraft tank), making thermal margin 110 available in the cold side accessible to the hot side reduces or eliminates the need to recirculate the cold side fluid to a supplemental heat sink. In certain embodiments, it is contemplated that no supplemental heat sink is required for second fluid system 106.

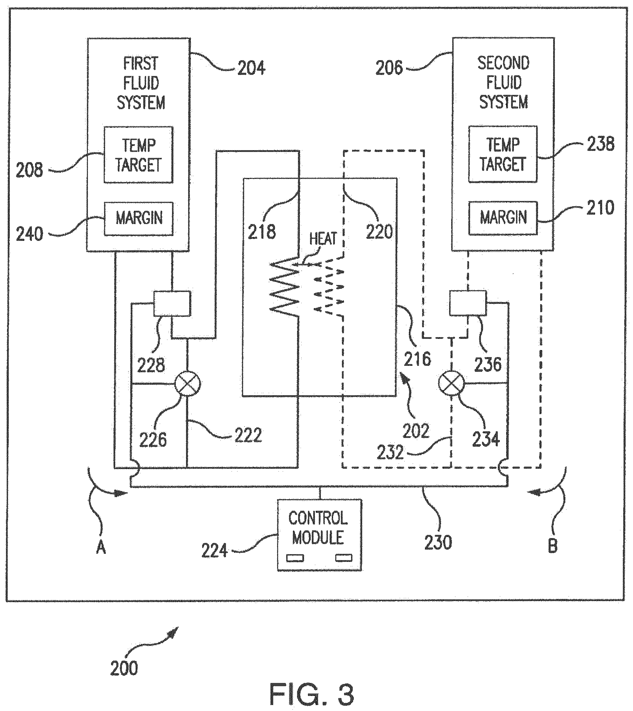

With reference to Fig. 3, a thermal management system 200 is shown. Thermal management system 200 is similar to thermal management system 100 and additionally comprises a bidirectional heat exchanger arrangement 202, a second bypass path 232, a second bypass valve 234, and a second temperature sensor 236. Bidirectional heat exchanger arrangement 202 is configured to transfer heat between first fluid path 218 and second fluid path 220 in either direction. In this respect heat can flow from first fluid path 218 to second fluid path when temperature of fluid A is greater than that of fluid B. Heat can also flow from second fluid path 220 to first fluid path 218 when temperature of fluid B is greater than that of fluid A.

Second bypass path 232 is similar to first bypass path 222 with the difference that second bypass path 232 is arranged fluidly in parallel with a portion of second fluid path 220 extending through heat exchange body 216. In this respect second bypass path 222 is disposed externally to heat exchange body 216, and is arranged to receive fluid from second fluid system 206 at a location upstream of heat exchange body 216 and to return the received fluid to second fluid path 220 at union disposed downstream of heat exchange body 216. As will be appreciated by those of skill in the art in view of the present disclosure, fluid traversing second bypass path 232 bypasses heat exchange body 216, reducing (or eliminating) heat transfer between portions of fluid A and fluid B traversing first fluid path 218 and second fluid path 220 through heat exchange body 216.

Second bypass valve 234 is disposed along second bypass path 222 and is arranged for throttling fluid traversing second bypass path 222. In this respect bypass valve 226 apportions fluid flow received from second fluid system 206 between bypass path 222 and a portion of second fluid path 220 extending through heat exchange body 216. As will be appreciated by those of skill in the art in view of the present disclosure, throttling fluid flow through bypass path 222 influences (e.g., increase or decrease) thermal communication between second fluid path 220 and first fluid path 218.

Second temperature sensor 236 is arranged along second fluid path 220 at a location downstream of heat exchange body 216 and the union of second bypass path 222 with second fluid path 220. In this respect second temperature sensor 236 is configured to acquire temperature information of fluid B as fluid B returns to second fluid system 206.

Control module 224 is operatively connected to by link 230 to both first bypass valve 226 and second bypass valve 234. Control module 224 is also communicative with both first temperature sensor 228 and second temperature sensor 236. Being communicative with both first temperature sensor 228 and second temperature sensor 236, and further operatively connected to both first bypass valve 226 and second bypass valve 234, control module 224 is arranged to determine temperatures of both fluid A and fluid B at locations downstream of heat exchange body 116 and compare the determined temperatures to selectable temperature targets for fluid A and fluid B (e.g., first temperature target 208 and second temperature target 238). Based on the comparison, control module 224 throttles either (or both) of portions of fluid A and fluid B traversing first bypass path 222 and second bypass path 232. This allows first fluid system 204 to utilize available margin 210 of second fluid system 206. It also allows second fluid system 206 to utilize available margin 240 of first fluid system 204. Thus, both first fluid system 204 and second fluid system 206 can be controlled, potentially allowing both fluid A and fluid B to be returned to first fluid system 204 and second fluid system 206 at their respective selected target temperatures. As will be appreciated, this can optimize the thermal operation of each system, for example, by heating fuel flowing to combustors of gas turbine engine 14 (shown in Fig. 1) while maintaining lubricant provided to gas turbine engine 10 at a predetermined target temperature.

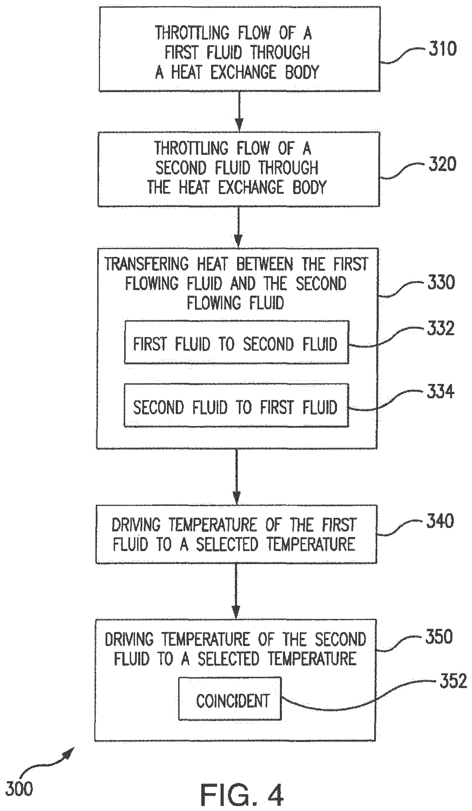

With reference to Fig. 4, a thermal management method 300 is shown. Method 300 includes throttling flow of a first fluid, e.g., fluid A (shown in Fig. 2) flowing through a heat exchange body, e.g., heat exchange body 116 (shown in Fig. 2), as shown with box 310. Method 300 also includes throttling flow of a second fluid, e.g., second fluid B (shown in Fig. 2), flowing through the heat exchange body as shown with box 320. Heat flows between the first fluid and the second fluid, as shown with box 330. Heat flow can be unidirectional, e.g., from first fluid A to second fluid B or vice versa, as shown by box 332. The temperature of first fluid flow is driven to a selected target temperature, e.g., temperature target 108 (shown in Fig. 2), using margin available in the second fluid, e.g., thermal margin 110 (shown in Fig. 2), as shown with box 340.

In certain embodiments, method 300 also includes driving the temperature of the second fluid to a second selected temperature target, e.g., temperature target 238 (shown in Fig. 3), using margin available in the first fluid system, e.g., margin 214 (shown in Fig. 3), as shown with box 350. Driving fluid in the second fluid system to the second fluid temperature target can be done coincidently, i.e. simultaneously, with driving fluid in the first fluid system to the first fluid temperature target, as shown with box 252.

## Claims

1. A heat exchanger arrangement for a gas turbine, comprising:
a heat exchange body (116);
a first fluid path (118) extending through the heat exchange body;
a second fluid path (120) extending through the heat exchange body in thermal communication with the first fluid path and fluidly isolated from the first fluid path;
a bypass path (122) external of the heat exchange body and fluidly connected in parallel with the first fluid path; and
a control module (124) operably connected to the bypass path and configured to control flow rate of fluids traversing the first fluid path and the second fluid path;
**characterized in that** the bypass path is a first bypass path (222) and by further comprising a second bypass path (232), wherein the second bypass path is external of the heat exchange body and is fluidly connected in parallel with the second fluid path, and wherein the control module is operably connected to the first bypass path and the second bypass path to control flow rate of fluids traversing the first fluid path and the second fluid path.

2. The heat exchanger arrangement as recited in claim 1, further comprising a bypass valve (126) disposed along the bypass path.

3. The heat exchanger arrangement as recited in claim 2, wherein the control module is operatively connected to the bypass valve.

4. The heat exchanger arrangement as recited in any preceding claim, further comprising a temperature sensor (128) in thermal communication with the first fluid path downstream of the heat exchange body.

5. The heat exchanger arrangement as recited in claim 4, wherein the control module is connected to the temperature sensor.

6. The heat exchanger arrangement as recited in any preceding claim, further comprising a second bypass valve (234) disposed along the second bypass path.

7. The heat exchanger arrangement as recited in claim 6, wherein the control module is operatively connected to the second bypass valve.

8. The heat exchanger arrangement as recited in any preceding claim, further comprising a temperature sensor (236) in thermal communication with the second fluid path downstream of the heat exchange body.

9. The heat exchanger arrangement as recited in claim 8, wherein the control module is connected to the temperature sensor.

10. The heat exchanger arrangement as recited in any preceding claim, wherein one or more of the first fluid path and the second fluid path are in fluid communication with a lubrication circuit (26) of a gas turbine engine (14); and/or wherein one or more of the first fluid path and the second fluid path are in fluid communication with a fuel circuit (24) of a gas turbine engine; and/or wherein one or more of the first fluid path and the second fluid path are in fluid communication with a bleed air passage (28) of a gas turbine engine compressor section.

11. The heat exchanger arrangement as recited in any preceding claim, wherein the control module (124) is configured to execute instructions recorded on a non-transitory machine readable medium to:
throttle flow a first fluid through the heat exchange body (116); and
throttle flow a second fluid through the heat exchange body to thereby allow heat to transfer between the first fluid flow and the second fluid flow to drive temperature of the first fluid flow to a predetermined temperature and to drive temperature of the second fluid flow to a predetermined temperature.

12. A thermal management system, comprising:
a heat exchanger arrangement as recited in claim 1 or 10;
a first bypass valve (126) disposed along the first bypass path, wherein the control module is operatively connected to the first bypass valve;
a first temperature sensor (128) in thermal communication with the first fluid path downstream of the heat exchange body, wherein the control module is connected to the first temperature sensor;
a second bypass valve (232) disposed along the second bypass path, wherein the control module is operatively connected to the second bypass valve;
a second temperature sensor (236) in thermal communication with the second fluid path downstream of the heat exchange body, wherein the control module is connected to the second temperature sensor.

## Patentansprüche

1. Wärmetauscheranordnung für eine Gasturbine, umfassend:
einen Wärmetauschkörper (116);
einen ersten Fluidweg (118), der sich durch den Wärmetauschkörper erstreckt;
einen zweiten Fluidweg (120), der sich durch den Wärmetauschkörper erstreckt, in thermischer Kommunikation mit dem ersten Fluidweg und fluidisch von dem ersten Fluidweg isoliert;
einen Umgehungsweg (122) außerhalb des Wärmetauschkörpers und fluidisch parallel mit dem ersten Fluidweg verbunden; und
ein Steuermodul (124), das mit dem Umgehungsweg wirkverbunden und konfiguriert ist, um die Flussrate von Fluiden zu steuern, die den ersten Fluidweg und den zweiten Fluidweg durchqueren;
**dadurch gekennzeichnet, dass** der Umgehungsweg ein erster Umgehungsweg (222) ist und dass sie ferner einen zweiten Umgehungsweg (232) umfasst, wobei sich der zweite Umgehungsweg außerhalb des Wärmetauschkörpers befindet und fluidisch parallel mit dem zweiten Fluidweg verbunden ist, und wobei das Steuermodul mit dem ersten Umgehungsweg und dem zweiten Umgehungsweg wirkverbunden ist, um die Flussrate von Fluiden zu steuern, die den ersten Fluidweg und den zweiten Fluidweg durchqueren.

2. Wärmetauscheranordnung nach Anspruch 1, ferner umfassend ein Umgehungsventil (126), das entlang des Umgehungsweges angeordnet ist.

3. Wärmetauscheranordnung nach Anspruch 2, wobei das Steuermodul mit dem Umgehungsventil wirkverbunden ist.

4. Wärmetauscheranordnung nach einem vorhergehenden Anspruch, ferner umfassend einen Temperatursensor (128) in thermischer Kommunikation mit dem ersten Fluidweg stromabwärts des Wärmetauschkörpers.

5. Wärmetauscheranordnung nach Anspruch 4, wobei das Steuermodul mit dem Temperatursensor verbunden ist.

6. Wärmetauscheranordnung nach einem vorhergehenden Anspruch, ferner umfassend ein zweites Umgehungsventil (234), das entlang des zweiten Umgehungsweges angeordnet ist.

7. Wärmetauscheranordnung nach Anspruch 6, wobei das Steuermodul mit dem zweiten Umgehungsventil wirkverbunden ist.

8. Wärmetauscheranordnung nach einem vorhergehenden Anspruch, ferner umfassend einen Temperatursensor (236) in thermischer Kommunikation mit dem zweiten Fluidweg stromabwärts des Wärmetauschkörpers.

9. Wärmetauscheranordnung nach Anspruch 8, wobei das Steuermodul mit dem Temperatursensor verbunden ist.

10. Wärmetauscheranordnung nach einem vorhergehenden Anspruch, wobei einer oder mehrere von dem ersten Fluidweg und dem zweiten Fluidweg in Fluidkommunikation mit einem Schmierkreislauf (26) eines Gasturbinentriebwerks (14) stehen; und/oder wobei einer oder mehrere von dem ersten Fluidweg und dem zweiten Fluidweg in Fluidkommunikation mit einem Kraftstoffkreislauf (24) eines Gasturbinentriebwerks stehen; und/oder wobei einer oder mehrere von dem ersten Fluidweg und dem zweiten Fluidweg in Fluidkommunikation mit einem Zapfluftdurchlass (28) des Verdichterabschnittes eines Gasturbinentriebwerks stehen.

11. Wärmetauscheranordnung nach einem vorhergehenden Anspruch, wobei das Steuermodul (124) konfiguriert ist, um Anweisungen auszuführen, die auf einem nichtflüchtigen maschinenlesbaren Medium aufgezeichnet sind, um:
Fluss eines ersten Fluides durch den Wärmetauschkörper (116) zu drosseln; und
Fluss eines zweiten Fluides durch den Wärmetauschkörper zu drosseln, um dadurch zu ermöglichen, dass Wärme zwischen dem ersten Fluidfluss und dem zweiten Fluidfluss übertragen wird, um Temperatur des ersten Fluidflusses auf eine vorbestimmte Temperatur anzutreiben und um Temperatur des zweiten Fluidflusses auf eine vorbestimmte Temperatur anzutreiben.

12. Wärmeverwaltungssystem, umfassend:
eine Wärmetauscheranordnung nach Anspruch 1 oder 10;
ein erstes Umgehungsventil (126), das entlang des ersten Umgehungsweges angeordnet ist, wobei das Steuermodul mit dem ersten Umgehungsventil wirkverbunden ist;
einen ersten Temperatursensor (128) in thermischer Kommunikation mit dem ersten Fluidweg stromabwärts des Wärmetauschkörpers, wobei das Steuermodul mit dem ersten Temperatursensor verbunden ist;
ein zweites Umgehungsventil (232), das entlang des zweiten Umgehungsweges angeordnet ist, wobei das Steuermodul mit dem zweiten Umgehungsventil wirkverbunden ist;
einen zweiten Temperatursensor (236) in thermischer Kommunikation mit dem zweiten Fluidweg stromabwärts des Wärmetauschkörpers, wobei das Steuermodul mit dem zweiten Temperatursensor verbunden ist.

## Revendications

1. Agencement d'échangeur de chaleur pour une turbine à gaz, comprenant :
un corps d'échange de chaleur (116) ;
un premier trajet de fluide (118) s'étendant à travers le corps d'échange de chaleur ;
un second trajet de fluide (120) s'étendant à travers le corps d'échange de chaleur en communication thermique avec le premier trajet de fluide et isolé fluidiquement du premier trajet de fluide ;
un trajet de dérivation (122) extérieur au corps d'échange de chaleur et relié fluidiquement en parallèle au premier trajet de fluide ; et
un module de commande (124) relié de manière fonctionnelle au trajet de dérivation et configuré pour commander le débit de fluides traversant le premier trajet de fluide et le second trajet de fluide ;
**caractérisé en ce que** le trajet de dérivation est un premier trajet de dérivation (222) et comprenant en outre un second trajet de dérivation (232), dans lequel le second trajet de dérivation est extérieur au corps d'échange de chaleur et est relié de manière fluidique en parallèle au second trajet de fluide, et dans lequel le module de commande est relié de manière fonctionnelle au premier trajet de dérivation et au second trajet de dérivation pour commander le débit de fluides traversant le premier trajet de fluide et le second trajet de fluide.

2. Agencement d'échangeur de chaleur selon la revendication 1, comprenant en outre une soupape de dérivation (126) disposée le long du trajet de dérivation.

3. Agencement d'échangeur de chaleur selon la revendication 2, dans lequel le module de commande est relié de manière fonctionnelle à la soupape de dérivation.

4. Agencement d'échangeur de chaleur selon une quelconque revendication précédente, comprenant en outre un capteur de température (128) en communication thermique avec le premier trajet de fluide en aval du corps d'échange de chaleur.

5. Agencement d'échangeur de chaleur selon la revendication 4, dans lequel le module de commande est relié au capteur de température.

6. Agencement d'échangeur de chaleur selon une quelconque revendication précédente, comprenant en outre une seconde soupape de dérivation (234) disposée le long du second trajet de dérivation.

7. Agencement d'échangeur de chaleur selon la revendication 6, dans lequel le module de commande est relié de manière fonctionnelle à la seconde soupape de dérivation.

8. Agencement d'échangeur de chaleur selon une quelconque revendication précédente, comprenant en outre un capteur de température (236) en communication thermique avec le second trajet de fluide en aval du corps d'échange de chaleur.

9. Agencement d'échangeur de chaleur selon la revendication 8, dans lequel le module de commande est relié au capteur de température.

10. Agencement d'échangeur de chaleur selon une quelconque revendication précédente, dans lequel un ou plusieurs du premier trajet de fluide et du second trajet de fluide sont en communication fluidique avec un circuit de lubrification (26) d'un moteur à turbine à gaz (14) ;et/ou dans lequel un ou plusieurs du premier trajet de fluide et du second trajet de fluide est en communication fluidique avec un circuit de carburant (24) d'un moteur à turbine à gaz ; et/ou dans lequel un ou plusieurs du premier trajet de fluide et du second trajet de fluide sont en communication fluidique avec un passage d'air de prélèvement (28) d'une section de compresseur de moteur à turbine à gaz.

11. Agencement d'échangeur de chaleur selon une quelconque revendication précédente, dans lequel le module de commande (124) est configuré pour exécuter des instructions enregistrées sur un support non transitoire lisible par machine pour :
étrangler l'écoulement d'un premier fluide à travers le corps d'échange de chaleur (116) ; et
étrangler l'écoulement d'un second fluide à travers le corps d'échange de chaleur pour permettre ainsi le transfert de chaleur entre le premier écoulement de fluide et le second écoulement de fluide afin d'amener la température du premier écoulement de fluide à une température prédéterminée et d'amener la température du second écoulement de fluide à une température prédéterminée.

12. Système de gestion thermique, comprenant :
un agencement d'échangeur de chaleur selon la revendication 1 ou 10 ;
une première soupape de dérivation (126) disposée le long du premier trajet de dérivation, dans lequel le module de commande est relié de manière fonctionnelle à la première soupape de dérivation ;
un premier capteur de température (128) en communication thermique avec le premier trajet de fluide en aval du corps d'échange de chaleur, dans lequel le module de commande est relié au premier capteur de température ;
une seconde soupape de dérivation (232) disposée le long du second trajet de dérivation, dans lequel le module de commande est relié de manière fonctionnelle à la seconde soupape de dérivation ;
un second capteur de température (236) en communication thermique avec le second trajet de fluide en aval du corps d'échange de chaleur, dans lequel le module de commande est relié au second capteur de température.
